# EUROPEAN PATENT APPLICATION

(11) **EP 3 038 421 A1**
(43) Date of publication of application: **29.06.2016**
(21) Application number: 15201220.9
(22) Date of filing: 18.12.2015
(51) Int. Cl.: H04W 72/04

(54) **METHOD AND APPARATUS FOR COMMUNICATION USING A DECT COMMUNICATIONS PROTOCOL**

(30) Priority: 22.12.2014 EP 14199549
(71) Applicant: GN Netcom A/S, 2750 Ballerup (DK)
(72) Inventor: RASMUSSEN, Erik Witthøfft, DK-2750 Ballerup (DK)
(74) Representative: Zacco Denmark A/S

(57) **Abstract**

A method and apparatus e.g. a headset or a base station for controlling channel selection in a communications system (400) using a DECT communications protocol, wherein multiple predefined channels are established using multiple carrier signals at respective carrier frequencies (F1,F2, .. F8); comprising: transmitting (205) a first signal (S1) on multiple of the channels using automatic channel selection; transmitting a first signal and a second signal on multiple of the channels using automatic channel selection; setting a power level of carrier signals in a first group of channels to a first power level and setting a power level of carrier signals in a second group of channels to a second power level; wherein the second power level is deliberately set higher than the first power level. Wherein the first signal is transmitted in accordance with a first transmission scheme, wherein channel selection is restricted to the channels in the first group of channels, and the second signal is transmitted in accordance with the second transmission scheme, wherein channel selection is restricted to the channels in the second group of channels.

## Description

DECT (Digital Enhanced Cordless Telecommunications) is a standardized short-range communications system. The DECT protocol uses a combination of Frequency Division Multiple Access (FDMA), Time Division Multiple Access (TDMA) and Time Division Duplex (TDD) to transmit digital data and digital voice signals. This means that the radio spectrum is divided into physical channels in two dimensions: frequency and time.

The DECT protocol specifies a means for a portable unit, such as a cordless telephone or a headset, to access a telecom network via radio. Connectivity to the telecom network takes place via a base station to terminate the DECT radio link, and a gateway to connect calls to the fixed network. In most cases the gateway connection is to the public switched telephone network or a Voice over IP network.

Because the DECT standard requires devices to actively avoid interference within a frequency band to receive certification, the result is a clear frequency that is optimal for voice communication. To that end, all equipment approved for the DECT standard operating in a band around 1.9GHz must implement a listen-before-transmit spectrum-sharing etiquette. Interference manifests as pops, clicks or blanks noticeable to headset users, and occurs when two headsets share the same radio channel and timeslot. By changing channels when interference occurs, and by checking for interference before changing channels, DECT devices prevent interference.

Some DECT headset systems prevent interference by selecting the best available channel at the start of a call, and subsequently changing channels automatically if the channel in use becomes susceptible to interference from another user. When the headset system's audio link is enabled, it employs aperiodic adaptive channel selection to accomplish this channel changing. Rather than changing channels at a fixed interval of time, some systems change channels in response to changing conditions - such as the presence of another user sharing the same channel and producing interference. Some DECT headsets employ fixed-rate adaptive channel selection. This ensures that the base and headset are adapting to changes in the radio signal spectrum caused by other users and the presence of interferers.

Some manufacturers claim to guarantee successful use of DECT wireless headset systems in a high density installation. A high-density deployment is one in which many DECT headsets are installed within direct line-of-sight to each other. Such systems automatically sense the presence of other users and will reduce coverage area by reducing transmission power if there are too many other users to permit good audio performance at long range. The transmission power may be reduced to a minimal power such that systems effectively become a short-range (direct line-of-sight) in-office system.

However, this minimal power level is so low that it does not allow the individual headset user to roam very far from her/his desk. To allow for roaming, one or more individual base units (and the respective headsets) can be set to use a higher transmission power level. The problem with this setup is that in a densely populated office a single user that uses higher transmission power than the rest of the users can "lay down" the whole installation if she/he goes roaming.

By roaming is meant that a unit increases transmission power to support e.g. a longer communications range.

As a general rule the larger the number of systems, the shorter the range. And the further the roaming distance, the more audio disruption occurs. The most prominent disruption occurs when a headset user is distant from the base but close to other user systems.

Sometimes a unit such as a headset is denoted a portable part, abbreviated PP, and a headset base station or base is denoted a fixed part, abbreviated FP.

### RELATED PRIOR ART

Avaya "1.9 GHz DECT™ 6.0 - The New Standard in Wireless Technology", March 2007, discloses a headset using DECT 6.0 engineered for up to approximately 100 meters roaming or, alternatively, "unlimited" installation density with limitations on range.

DECT devices also prevent interference by selecting the best available channel at the start of a call, and subsequently changing channels automatically if the channel in use becomes susceptible to interference from another user. The headset automatically senses the presence of other users and will reduce coverage area (range) if there are too many other users to enable good audio performance at long range. Therefore, in a high-density environment the whole system effectively becomes short-range in-office system.

US 8,577,318 B2 discloses optimized channel selection in a TDMA communications system such as a DECT system. The optimized channel selection determines a ranking of transmission channels based on measuring an interference signal such as the so-called RSSI for each channel. The channels are then ranked from channels with lowest interference to highest interference; wherein those with lowest interference are grouped to belong to a "long range class" and those with highest interference are grouped to belong to a "not long range class". Further, those with lowest interference i.e. the cleanest channels are then assigned to be used for relatively long range communication; and highest interference channels are assigned to be used for relatively short range communication. It is claimed that long-range communication can then be enabled even in a dense installation.

It is recognized that the highest density of communication devices such as headsets and headset base stations, e.g. in an office space, can be achieved when the devices transmit at a minimal power level, where radio frequency interference among the channels is at a lowest level, other things being equal.

However, conventionally this minimal power level is so low that it does not allow say a headset user to roam very far from a headset base station e.g. located at her/his desk. To allow for roaming, one or more individual base units (and the respective headsets) can be set to use a higher transmission power level. The problem with this setup is that in a densely populated office space a single user that uses higher power than the rest of the users can "lay down" the whole installation if she/he goes roaming. Due to the interference precaution scheme performed in accordance with e.g. the DECT standard, the high transmission power headset can/will cause a low transmission power base/headset to switch to a new frequency which in turn may case another base/headset to switch etc.

### SUMMARY

It is an object to prevent a roaming device from "laying down" an installation.

There is provided a method of controlling channel selection in a communications system using a frequency division communications protocol, wherein predefined channels are established using multiple carrier signals at respective carrier frequencies; comprising: transmitting a first signal on one or more of the channels using automatic channel selection; configuring a power level of carrier signals in a first group of channels for a first power level and configuring a power level of carrier signals in a second group of channels for a second power level; wherein the second power level is deliberately higher than the first power level; wherein the first signal is transmitted in accordance with a first transmission scheme, wherein channel selection is restricted to the channels in the first group of channels, and/or in accordance with the second transmission scheme, wherein channel selection is restricted to the channels in the second group of channels.

Thereby the risk that a first transmitter transmitting to a first receiver on one channel suddenly induces interference to other receivers by suddenly increasing transmission power is reduced. This in turn reduces the risk that other transmitters and receivers starts a run towards better channels (in terms of lower interference), which could lay down a whole installation of transmitter and receivers.

Further, improved flexibility and transmission quality is provided to users of the communications system. A subset of the predefined channels is thereby assigned to the first transmission scheme and another subset of the predefined channels is assigned to the second transmission scheme, wherein the subsets are mutually exclusive in terms of channels. The predefined channels are also denoted available channels.

In some embodiments the predefined channels are transmitted using respective carrier signals at respective carrier frequencies. In connection therewith channels are also denoted frequency channels.

Thus, a set of available frequency channels is divided into a first group and a second group, namely one group of channels for stationary (low power) units and another group for roaming (high power) units. In Europe, for instance, eight channels could be reserved for stationary units while two channels could be made available for roaming units. In this way, a limited number of units and/or users are allowed to roam while at the same time their roaming would have very little or no effective impact on the stationary units. This greatly improves the perceived quality of a DECT installation or another installation using a FDMA protocol.

In some embodiments, configuring a power level of carrier signals in the first group of channels comprises limiting the power level to a power level below a first power limit. In some embodiments, configuring a power level of carrier signals in the second group of channels comprises setting the power level to a power level within a predefined range, with a lower limit and an upper limit. The lower limit may be less than the first power limit or substantially equally to the first power limit.

In some embodiments, the method of controlling channel selection is conducted from a base station. Thereby, in respect of channel selection and/or transmission scheme selection the base station operates as a master in a master-slave configuration, wherein the headset is a slave unit.

The first signal may be a voice signal such as a digital voice signal picked up by one or more microphones of a headset and transmitted to a headset base station or a voice signal transmitted from the base station to the headset. The first signal is alternatively and/or additionally a data signal.

Automatic channel selection is a conventional technique deployed for instance in devices complying with the DECT standard. Channel change, from one channel to another, which may comprise automatic channel selection under the DECT standard, is performed at regular intervals or when needed to preserve a quality level of the transmission.

DECT is originally an ETSI standard. The document EN 300 175-1: "Digital Enhanced Cordless Telecommunications (DECT)" gives an overview of various parts of DECT and has been adopted by various other bodies in connection with descendants and variations of DECT, which are here comprised by the term 'DECT'.

The first group and the second group of channels are selected among the predefined channels. Thus, additionally channels need not be fitted into an available or reserved frequency spectrum.

The frequency division communications protocol may be a Frequency Division Multiple Access (FDMA) protocol in combination with a Time Division Multiple Access (TDMA) protocol and/or a Time Duplex Division (TDD) protocol.

The first signal may be transmitted concurrently with a second signal in accordance with a FDMA and TDMA protocol. A first set of multiple signals may be transmitted concurrently in accordance with the first transmission scheme. A second set of multiple signals may be transmitted concurrently in accordance with the second transmission scheme. The first of multiple signals and the second set of multiple signals may be transmitted concurrently.

In some embodiments the method comprises setting an intermediate power level of carrier signals in a third group of channels to a third power level; wherein the third power level is deliberately set higher than the first power level and lower than the second power level.

Configuring a power level of carrier signals may comprise configuring a transmitter or transceiver by a hardware specific configuration or by dynamic or static hardware programming (e.g. in FPGAs) or by software control.

The first transmission scheme and/or the second transmission scheme may be embodied by a hardware specific configuration or by dynamic or static hardware programming (e.g. in FPGAs) or by software control.

In some embodiments the method comprises restricting the first signal or a group of signals for transmission in accordance with the first transmission scheme.

Thereby the first signal or the first group of units or users is kept within the restrictions of the first transmission scheme. Other channels assigned to the second transmission scheme is thereby not cluttered by units or users assigned to the first group at least for a period of time. This gives the possibility of allocating units or users in accordance with an identified use pattern. In some embodiments the method comprises restricting signals assigned to second group of devices or user's for communication via the second transmission scheme.

In some embodiments the group of signals comprises or is restricted to include signals that are assigned to a first group of units or users. Thereby some units or users can be administered to be in accordance with the first transmission scheme at least for a period of time.

The signals assigned to a first group or second group of units or users may be restricted exclusively or solely to communicate in accordance with the first and/or second transmission scheme, respectively.

In some embodiments the method comprises receiving settings that assign signals, devices or users to: a first group, permitted to use exclusively the first transmission scheme, or a second group, permitted to use exclusively the second transmission scheme, or a third group, permitted to use a combination of the first and second transmission scheme; wherein channel selection, during transmission of signals respective devices or users, is performed in accordance with the received settings.

The settings may be received via a user interface of a headset base station or via a control panel configured to manage settings for one or more headset base stations. In some embodiments one or more headset base stations are coupled to receive the settings via a web-server hosted remotely e.g. on an intranet or Internet server or via a web-server embedded in a headset base station.

In some embodiments the settings comprise settings defining whether channel selection is allowed to take place dynamically among two or more of the first, second and third group.

In some embodiments the method comprises branching the first signal into a first branch signal and into a second branch signal; wherein the first branch signal and the second branch signal are transmitted in parallel in accordance with the first transmission scheme and in accordance with the second transmission scheme, respectively.

In some aspects the first signal is branched into the second branch temporarily and when branching commences the first signal is redirected from a first branch to the second branch, while the first branch is kept alive as a beacon i.e. header information is transmitted without payload. Header information may be transmitted as so-called packet headers. Thus, in this aspect, headers of the first signal are transmitted in parallel on both branches, whereas payload is transmitted on one of the branches. When branching terminates, the first signal is redirected back to the first branch in the sense that both header information and payload is transmitted on the first branch, while transmission of the first signal on the second branch terminates.

In some aspects, the first branch transmits random data or so-called dummy data as payload instead of transmitting without payload.

In yet some aspects, the first signal is transmitted in parallel on both the first branch and on the second branch at least temporarily. Thus, in this aspect, the payload is transmitted in parallel in the sense that payload is transmitted both on the first branch and on the second branch and thus in double. By 'in parallel' is understood that the payload is transmitted in parallel on different frequencies and that different timeslots may be used when transmitting portions of the first signal. Thus, in this aspect, the second branch mirrors the first branch or vice versa.

In the above aspects the fact that transmission takes place in parallel does not increase the bandwidth of the transmitted payload.

When a first device (e.g. a headset) and a second device (e.g. a base station) need high power to reach each other, they will in general not be able to reach each other on low power channels. By keeping the low power channel active in one or more of the above ways, it is possible to prevent other devices from occupying one or more of the channel/ channels and timeslot/timeslots while the headset is roaming by communication on a high power channel. When one of the devices, e.g. a base station, continues to transmit to the other device, e.g. a headset, on the low power channel other systems will recognize that the air space is occupied and will not enter into it.

In some aspects, it is only a base station that keeps transmitting in the low power channel. A headset stops transmitting in the low power channel when roaming. In this way it does not disturb other DECT systems operating in a low power mode and that the headset passes.

A basic scheme for parallel transmission is that different time slots are used for low power and high power branches. Thus, the first group of channels is transmitted in first time slots and the second group of channels is transmitted in second time slots; wherein the first time slots and the second time slots are mutually exclusive. In this way the base only needs a single radio transmitter. If the base would implement dual transmitters both branches could also use the same time slot.

In many aspects it is preferred that branching and de-branching is controlled by a base station. The base station then instructs e.g. a headset when to switch from the low power channel to the high power channel and when to switch back.

The first signal and the second signal thereby become a first branch signal and a second branch signal, respectively. The main signal may be any type of signal, for instance a voice signal picked up by a microphone in a headset or a voice signal from a headset base station to the headset. The main signal is branched such that it is effectively transmitted in accordance with the first transmission scheme and in accordance with the second transmission scheme. Thereby transmission can be continued uninterrupted when a user is roaming. Such a solution may offer a more stable channel and/or time slot allocation among users operating under the first transmission scheme.

At a receiver side the first and second signal is received and the main signal is reconstructed using either or both of the first signal and the second signal. The reconstruction may be based on a measured value of a signal quality indicator.

By the term 'in parallel' is meant that the signals are transmitted concurrently but subject to channel shifting or time slot shifting.

In some embodiments the method comprises shifting a transmission of the first signal from being transmitted in accordance with the first transmission scheme to be transmitted in accordance with the second transmission scheme, or vice versa.

Thereby it is possible to utilize the availability of the first and the second transmission scheme to support occasioned roaming without disturbing non-roaming users. Occasioned roaming can be performed when desired or in response to values of a signal quality indicator.

When a reverse shift is made, i.e. the transmission is shifted from being transmitted in accordance with the second transmission scheme to be transmitted again in accordance with the first transmission scheme, it can be avoided that the channels available under the second transmission scheme are cluttered with too many signals or users.

In some embodiments an ongoing transmission is shifted from one transmission scheme to another at a fixed shift rate or at dynamically adapted shift rate or more or less occasionally but at an upwardly limited shift rate when a predefined criterion is met. Comparatively, channel selection takes place at a fixed rate or at dynamically adapted rate which is significantly faster than the shift rate at which an ongoing transmission is shifted from one transmission scheme to another.

The user assignment could alternatively be dynamic and be based on detected user behaviour. In the latter case, all users could default to use channels in the stationary group. When a base unit detects that the respective headset user roams, the base unit could attempt to switch to a channel in the roaming group.

The base unit may keep on transmitting on the stationary channel concurrently with the roaming channel in order to allow a more stable control of the stationary channels.

In some embodiments units are statically assigned to either the low power group or the high power group. In either case the units may use only the subset of the available channels that are assigned to the corresponding group. The assignment is done by a physical switch or via pc control etc. and may be performed by the individual user or by a system administrator. Units that are statically assigned to the low power group are thus not foreseen to support user roaming.

In some embodiments the method comprises measuring values of a signal quality indicator for each of the multiple channels; in respect of the first signal being transmitted on a current channel in accordance with the first transmission scheme and in connection with deciding on selecting another channel in the first transmission scheme: shifting transmission of the signal from the first transmission scheme to the second transmission scheme in case measured values of a signal quality indicator indicates that other channels in the first transmission scheme yields a signal quality below a predefined threshold.

The predefined threshold may be set statically or dynamically to indicate that other channels in the first transmission scheme yield a poorer signal quality, which may be the case when a user is about to need roaming e.g. because he/she is moving.

The unit dynamically determines whether it should use the low power group of channels or the high power group of channels according to the roaming modus of the headset user. If the headset user is moving (to a more remote position) the high power group is selected otherwise the low power group is selected.

The predefined threshold may be set to a predefined, fixed value or to a current value of the signal quality indicator in respect of the signal being transmitted. The latter case reflects that the predefined threshold is set dynamically to indicate that other channels in the first transmission scheme yield a poorer signal quality. That is, to indicate that no other channels in the first transmission scheme yields a measured value that is on par or improved relative to a measured value of the signal quality indicator for the current channel.

In some embodiments the shift is performed in case measured values of a signal quality indicator indicates that all or nearly all other channels in the first transmission scheme yields a signal quality below a predefined threshold.

The signal quality indicator may be the so-called Received Signal Strength Indicator (RSSI) and/or a signal-to-noise indicator and/or a bit-error rate or another signal quality indicator.

Shifting transmission of the signal from the first transmission scheme to the second transmission scheme, or vice versa, may be subject to conditions such as a maximum number of users assigned to the second transmission scheme.

In some embodiments the method comprises measuring values of a signal quality indicator for each of the multiple channels; in respect of the first signal, determining a trend in the measured values of the signal quality indicator; and shifting transmission of the first signal from the first transmission scheme to the second transmission scheme, in case the trend is going towards or below a poorer signal quality level than measured for any other channel among the channels under the first transmission scheme. Thereby an indicator of a user's movement to a more remote position is provided. The indicator is then used to shift communication to a roaming channel such that communication can continue albeit at a longer range.

The trend may be based on evaluating values of the signal quality indicator over time and may include using filtering comprising low-pass filtering and filtering configured to predict one or more future values.

In some embodiments the method comprises shifting the transmission of the first signal from the first transmission scheme to the second transmission scheme, or vice versa; wherein shifting the transmission comprises starting transmission on the second transmission scheme and stopping transmission on the first transmission scheme, or vice versa.

Thereby the available channels may be utilized for serving the highest number of users since channels are not reserved for communication that effectively takes place on another channel.

Shifting the transmission of the first signal from the first transmission scheme to the second transmission scheme, or vice versa, may involve a temporal and time-limited overlap, during which the first signal is branched to be transmitted both under the first transmission scheme and under the second transmission scheme.

In some embodiments the method comprises shifting transmission from the first transmission scheme to the second transmission scheme or vice versa; and wherein shifting the transmission comprises starting transmission on the second transmission scheme and continuing transmission on the first transmission scheme, or vice versa.

Thereby the transmission schemes may be utilized such that the change in the amount of signals transmitted under the first transmission scheme is kept at a stable level. Thereby channel selection and slot shifting may be performed more smoothly.

There is also provided a base station configured to perform the steps of the method.

There is also provided a headset configured to perform the steps of the method.

There is also provided an apparatus configured communicate in accordance with a frequency division communications protocol and to control channel selection, wherein the apparatus is configured to transmit respective carrier signals at respective carrier frequencies and establish predefined channels; comprising: a transceiver configured to transmit a first signal on one or more of the predefined channels using automatic channel selection; wherein the transceiver is configured to transmit carrier signals in a first group of channels at a first power level and to transmit carrier signals in a second group of channels at a second power level; wherein the second power level is deliberately higher than the first power level; wherein the transceiver is configured to transmit the first signal in accordance with a first transmission scheme, wherein channel selection is restricted to the channels in the first group, and/or to transmit the first signal in accordance with the second transmission scheme, wherein channel selection is restricted to the channels in the second group of channels.

The apparatus may be a unit such as a portable part e.g. a headset or a fixed part e.g. a headset base station. The transceiver is a portion thereof configured to perform radio communication via an antenna.

In one example the unit uses similar or identical radio circuits and/or network identity and/or address to transmit in the low power transmission scheme as well as in the high power transmission scheme.

In one example the unit use similar or identical radio circuits in the low and high power transmission scheme but uses different identities and/or addresses for the low and high power transmission schemes.

In one example the units uses different radio circuits and different identities/addresses for the low and high power transmission schemes.

In one example the unit transmits in the low and high power group with the same radio technology, for example DECT.

In one example the unit transmits in the low power transmission scheme with a first radio technology, for example Bluetooth or Wi-Fi, and transmits in the high power transmission scheme with another radio technology, for example DECT.

There is also provided a computer data signal embodied in a carrier wave and representing sequences of instructions which, when executed by a processor, cause the processor to perform the steps of the above method.

There is also provided a computer program product comprising program code means adapted to cause a data processing system to perform the steps of the method set forth above, when said program code means are executed on the data processing system.

The computer program product may comprise a computer-readable medium having stored thereon the program code means. The computer-readable medium may be a semiconductor integrated circuit such as a memory of the RAM or ROM type, an optical medium such as a CD or DVD or any other type of computer-readable medium.

There is also provided a computer data signal embodied in a carrier wave and representing sequences of instructions which, when executed by a processor, cause the processor to perform the steps of the method set forth above. The computer data signal may be a download signal. The computer data signal is communicated via a protocol such as the TCP/IP protocol.

Here and in the following, the terms 'base station', 'headset base station', 'headset', 'processor', 'unit', 'device' etc. are intended to comprise any circuit and/or device suitably adapted to perform the functions described herein. In particular, the above term comprises general purpose or proprietary programmable microprocessors, Digital Signal Processors (DSP), Application Specific Integrated Circuits (ASIC), Programmable Logic Arrays (PLA), Field Programmable Gate Arrays (FPGA), special purpose electronic circuits, etc., or a combination thereof.

### BRIEF DESCRIPTION OF THE FIGURES

A more detailed description follows below with reference to the drawing, in which:
fig. 1 shows a block diagram of a unit in a first embodiment with a first and a second transmission scheme;
fig. 2 shows a flowchart for a method of controlling channel selection;
fig. 3 shows a transmission spectrum for the first and second transmission scheme;
fig. 4 shows a headset and a base station; and
fig. 5 shows a block diagram of a unit in a second embodiment with a first and a second transmission scheme.

### DETAILED DESCRIPTION

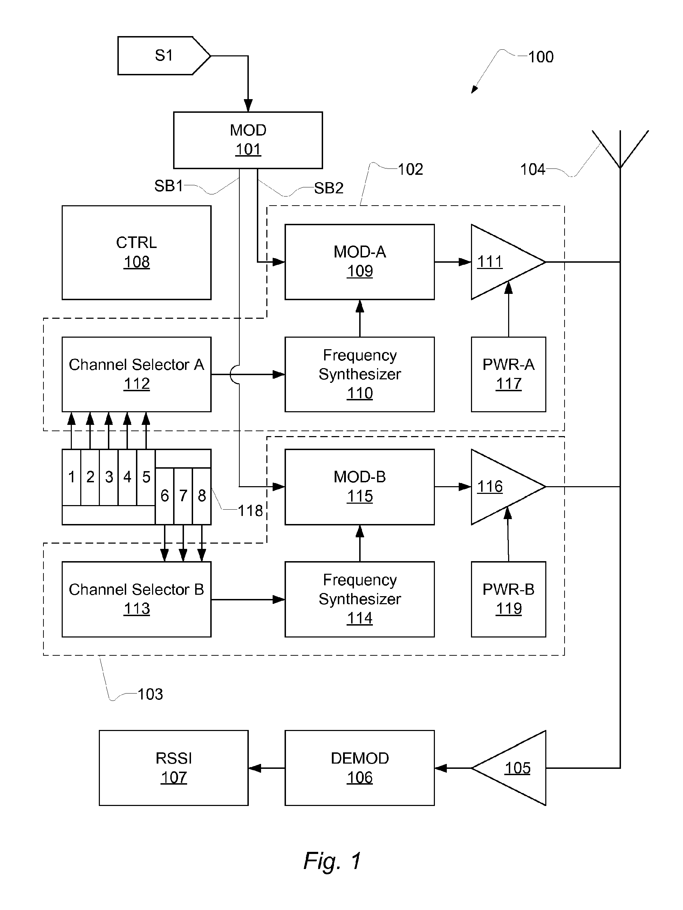

Fig. 1 shows a block diagram of a unit in a first embodiment with a first and a second transmission scheme. In the first embodiment, the unit 100 comprises a first transmitter 102 and a second transmitter 103 that uses respective groups of carrier signals to transmit a signal, S1, such as a voice signal or a data signal, as a wireless signal via an antenna 104.

A carrier signal of the first transmitter 102 is generated by modulator MOD-A, 109, and is amplified by a radio frequency amplifier 111. The power level at which the carrier signal is transmitted is set by power unit PWR-A, 117, and is denoted a first power level.

Likewise, for the second transmitter 103, a carrier signal of the second transmitter 103 is generated by modulator MOD-B, 115, and amplified by a radio frequency amplifier 116. The power level at which the carrier signal of the second transmitter is transmitted is set by power unit PWR-B, 119, and is denoted a second power level. The second power level is higher than the first power level. So the carrier signal from the second transmitter is stronger than the carrier signal from the first transmitter. The second power level is e.g. higher than 13 dBm ±1dBm e.g. 20 dBm ±1dBm or 23dBm ±1dBm, whereas the first power level is lower than 10 dBm ±1dBm e.g. 6dBm ±1dBm or 0dBm. The second power level is higher than the first power level by more than 3 dBm ±1dBm e.g. by more than 6 dB ±1dB, or more than 10 dB ±1dB, or more than 13 dB ±1dB or more than 20 dB ±1dB.

The frequencies of the respective carrier signals are synthesized by respective frequency synthesizers 110 and 114 which synthesize a frequency selected by channel selector A, 112, and channel selector B, 113, respectively. As shown, channel selector A, 112, is restricted by a channel group organizing unit 118 to select a frequency channel among the channels 1 through 5. In a similar manner, channel selector B, 113, is restricted by the channel group organizing unit 118 to select a frequency channel among the channels 6 through 8. Alternatively, other channel groups can be set and/or fewer or more than 8 channels may be available. In this embodiment, the channel group organizer 118 thus assigns available channels 1 through 8 to either the first transmitter 102 or the second transmitter 103 in a mutually exclusive manner i.e. a channel is assigned to be transmitted either at high power or at low power; not both. The modulators 109 and 115 may be FDMA modulators.

With the above described configuration of the unit 100, the signal S1 is input to the modulator A, 109, via a signal SB1 of the first transmitter 102 and to the modulator B, 115, via a signal SB2 of the second transmitter 103 via a modulator MOD, 101. The modulator 101 may be a TDMA modulator. By means of time-division modulation, the signal S1 is transmitted in allocated time slots or simply slots. The allocated slots are selected in a conventional way known in the art such that interference with signals from other transmitters is avoided. A controller 108 may be used for this and/or other purposes. Thus the first transmitter 102 and the second transmitter 103 implements the first transmission scheme and the second transmission scheme, respectively.

The controller 108 may also be configured in combination with channel group organizing unit 118 to restrict the first signal, S1, or a group of signals for transmission by means of the first transmitter 102 in accordance with the first transmission scheme. Also controller 108 may be configured to restrict the first signal or a group of signals for transmission by means of the second transmitter 103 in accordance with the second transmission scheme.

In some embodiments the controller 108 is configured to receiving settings that assign signals, devices or users to: 1) a first group, permitted to use exclusively the first transmission scheme, or 2) a second group, permitted to use exclusively the second transmission scheme, or 3) a third group, permitted to use a combination of the first and second transmission scheme. The controller may then perform channel selection, during transmission of signals respective devices or users, in accordance with the received settings. The controller 108 may be configured to receive the settings from an Intranet or Internet server or another system wherefrom settings can be administrated. Such configurations are known in the art.

The signal S1 may be transmitted simultaneously or in parallel by both the first transmitter 102 and the second transmitter 103. Thus, the controller 108 or the configuration of the unit 100 may enable branching of the first signal, S1, assigned to a user, into the first branch signal, SB1, and into a second branch signal, SB2; wherein the first branch signal and the second branch signal are transmitted in parallel in accordance with the first transmission scheme and in accordance with the second transmission scheme, respectively.

The controller may shift a transmission of the first signal from being transmitted as the first signal in accordance with the first transmission scheme to be transmitted in accordance with the second transmission scheme, or vice versa.

It should be noted that the signal S1 may be allocated to some time-slots in the signal SB1 and to other time-slots in the signal SB2.

A person skilled in the art will recognize various ways of implementing the above. Also, the person skilled in the art will recognize how to receive signals e.g. to implement a listen-before-talk technique and/or to compute an indicator of received signal strength e.g. the so-called Received Signal Strength Indicator abbreviated RSSI. The unit 100 may thus comprise receiving signals via amplifier 105 that is coupled to receive signals via the antenna 104, to demodulate the signals by demodulator 106 and compute an indicator of: ongoing transmissions among remote transmitters and receivers (to implement a listen-before-talk technique), interference, and/or signal strength.

An explicated description of the channel selection in connection with time-division and frequency-division modulation is given below, with reference to table 1 and similarly structured tables below, wherein each row represents a frequency channel and wherein each column represents a timeslot. The tables show exemplary values of RSSI in dBm for respective channels and timeslots.

With reference thereto, in a first example, channel and slot selection is performed by the FP. The FP continuously monitors the RSSI, which may appear as shown below in table 1:

**Table 1: RSSI [dBm] per channel and slot**

| Channel↓ | Slot→ | | | | | | | | |
|---|---|---|---|---|---|---|---|---|---|
| | **1** | **2** | **3** | **4** | **5** | ... | **13** | **14** | **15** |
| 1 | -70 | -66 | -69 | -65 | -68 | | -70 | -66 | -69 |
| 2 | -80 | -50* | -71 | -73 | -66 | | -80 | xx | -71 |
| 3 | -71 | -63 | -70 | -58 | -67 | | -71 | -63 | -70 |
| 4 | -60 | -80 | -80 | -66 | -57 | | -60 | -80 | -80 |
| 5 | -65 | -65 | -71 | -67 | -79 | | -65 | -65 | -71 |
| 6 | -77 | -75 | -60 | -77 | -80 | | -77 | -75 | -60 |
| | | | | | | | | | |
| 7 | -70 | -63 | -33 | -80 | -40 | | -44 | -63 | -33 |
| 8 | -66 | -44 | -60 | -66 | -44 | | -55 | -44 | -60 |

Table 1 shows a snapshot of a RSSI measurement. In this example it is assumed that frequency channels 1 to 6 are assigned to a low power group while channels 7 and 8 are assigned to a high power group.

The snapshot in table 1, illustrates that the FP currently transmits in slot 14 of channel 2 (shown by 'xx') and receives in slot 2 of channel 2 (shown by '*') while the PP, correspondingly, transmits in slot 2 and receives in slot 14, of channel 2.

The FP constantly monitors the RSSI of its PP (channel 2 slot 2). If the RSSI of the PP drops below a certain limit the FP will conclude that the user is on the go (e.g. walking towards a more remote position) and it will look for an available channel and slot in the high power channel group. If a high power channel and slot is found, the FP will instruct the PP and perform the switch.

The RSSI threshold at which the FP will start the group transition may be fixed. It could be selectable by the user or under control of a system administrator e.g. via an Intranet or Internet server.

The RSSI could also be adaptive. The FP then dynamically analyses the RSSI values of all slots and channels in the low power group in order to deduct a background noise level and then set a roaming threshold relative to the background RSSI level. The background RSSI level is e.g. computed as the mean of the n lowest RSSI measurements of any channel/slot combination; wherein n is an index value.

When the FP decides to transition to the high power group, the FP preferably continues to transmit in the currently allocated channel and slot in the low power group. In this way it will assure that its low power channel and slot will still be available when the headset user returns to a closer position (e.g. his office chair) because other units will stay away from the channel/slot while it is in use. The FP may however also decide to stop the transmission in the low power group while it is transmitting in the high power group.

Once the unit has switched to roaming state and transmits in the high power channel group it will want to monitor the RSSI measurement in order to establish whether to return to the low power channel group. The FP can again set a threshold on the RSSI measurement for the slot where its PP is transmitting. When this RSSI value exceeds a predefined limit it is indicator that the PP is close to the FP and that the unit can switch to the low frequency group and stop transmitting in the high power group.

Turning to table 2 and 3 below, snapshots of RSSI measurements taken while the unit is transmitting in the high power groups are shown.

If the RSSI threshold in the roaming mode for example was set to -30 dBm then the RSSI in table 2 would indicate that the unit should stay in the high power group while the RSSI of table 3 would indicate that the unit should transition to the low power group.

**Table 2: RSSI [dBm] per channel and slot**

| Channel↓ | Slot→ | | | | | | | | |
|---|---|---|---|---|---|---|---|---|---|
| | **1** | **2** | **3** | **4** | **5** | ... | **13** | **14** | **15** |
| 1 | -70 | -66 | -69 | -65 | -68 | | -70 | -66 | -69 |
| 2 | -80 | -80(*) | -71 | -73 | -66 | | -80 | xx | -71 |
| 3 | -71 | -63 | -70 | -58 | -67 | | -71 | -63 | -70 |
| 4 | -60 | -80 | -80 | -66 | -57 | | -60 | -80 | -80 |
| 5 | -65 | -65 | -71 | -67 | -79 | | -65 | -65 | -71 |
| 6 | -77 | -75 | -60 | -77 | -80 | | -77 | -75 | -60 |
| | | | | | | | | | |
| 7 | -70 | -63 | -33 | -80 | -40 | | -44 | -63 | -33 |
| 8 | -66 | -44 | -40* | -66 | -44 | | -55 | -44 | xx |

**Table 3: RSSI [dBm] per channel and slot**

| Channel↓ | Slot→ | | | | | | | | |
|---|---|---|---|---|---|---|---|---|---|
| | **1** | **2** | **3** | **4** | **5** | ... | **13** | **14** | **15** |
| 1 | -70 | -66 | -69 | -65 | -68 | | -70 | -66 | -69 |
| 2 | -80 | -80(*) | -71 | -73 | -66 | | -80 | xx | -71 |
| 3 | -71 | -63 | -70 | -58 | -67 | | -71 | -63 | -70 |
| 4 | -60 | -80 | -80 | -66 | -57 | | -60 | -80 | -80 |
| 5 | -65 | -65 | -71 | -67 | -79 | | -65 | -65 | -71 |
| 6 | -77 | -75 | -60 | -77 | -80 | | -77 | -75 | -60 |
| | | | | | | | | | |
| 7 | -70 | -63 | -33 | -80 | -40 | | -44 | -63 | -33 |
| 8 | -66 | -44 | -20* | -66 | -44 | | -55 | -44 | xx |

In table 2 and 3 above it is assumed that the FP continues to transmit in the low power group while it utilizes the high power group for the actual signal/data transmission, however this need not be the case in all embodiments.

The unit may be a fixed point (FP) or a portable point (PP). The unit may be a headset or a headset base station or a telephone handset or a telephone handset base station or another type of unit.

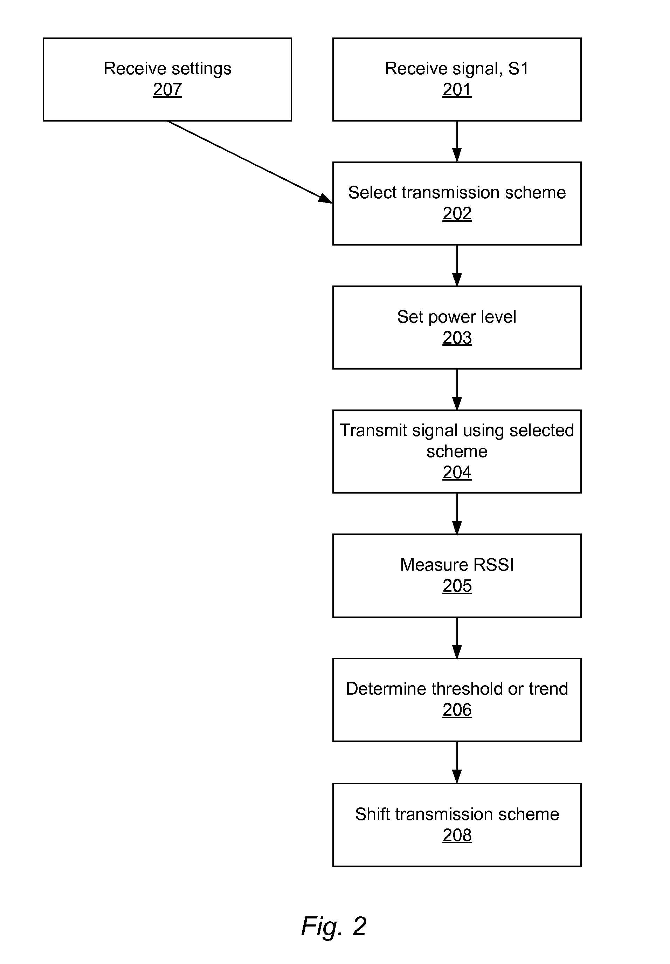

Fig. 2 shows a flowchart for a method of controlling channel selection. The method is performed by a unit such as a radio transmitter or the transmitter portion of a radio transceiver.

In a first step 201 a signal S1 is received by the radio transmitter. In case the transmitter is embodied in a headset, the signal S1 is received e.g. from an audio signal processor (not shown) and an encoder (not shown) that in combination converts a signal from a microphone configured to pick up a user's voice to a digital signal that can be transmitted wirelessly. In case the transmitter is embodied in a headset base station, the signal S1 is received e.g. from the switched public telephone network (PSTN) and/or the Internet.

Optionally, the method may comprise step 207 receiving settings e.g. from an Intranet server and/or from a user interface of the headset base station that assign signals, devices or users to 1) a first group, permitted to use exclusively the first transmission scheme, or 2) a second group, permitted to use exclusively the second transmission scheme, or 3) a third group, permitted to use a combination of the first and second transmission scheme.

Based on the received settings or from otherwise configured settings, a transmission scheme for the signal S1 is selected in step 202. A transmission scheme is selected from a group comprising a first transmission scheme and a second transmission scheme. In accordance with the first transmission scheme channel selection is restricted to channels among a first group of channels; and in accordance with the second transmission scheme, channel selection is restricted to channels among a second group of channels.

Step 203 comprises configuring and/or setting a power level of carrier signals in the first group of channels for the first power level and configuring and/or setting a power level of carrier signals in the second group of channels for a second power level. The configuration of a power level may be implemented by a hardware configuration or by a hardware configuration operating under control of a programme run by a processor.

In step 204 transmission of signal S1 is performed in accordance with the selected transmission scheme and thus at the respective power level.

This transmission, in accordance with the selected transmission scheme, continues until the transmission is terminated (e.g. in response to a call being terminated).

However, the method may involve measuring values of a signal quality indicator e.g. RSSI for each of the multiple channels and then the transmission scheme may be changed from the first transmission scheme to the second transmission scheme for an ongoing transmission in case values of the signal quality indicator drops below a threshold. The reverse situation may also occur, e.g. that an ongoing transmission takes place in accordance with the second transmission scheme and then that the value of the signal quality indicator is above a threshold; which makes it possible to change to the first (low power) transmission scheme.

RSSI or another signal quality measure is measured or computed in step 205. A threshold for determining at what level of the signal quality level indicator to change transmission scheme is determined in step 206. In combination therewith or additionally, a trend of values for determining when to change transmission scheme is determined.

Based on an evaluation of values of the signal quality indicator against the threshold, the transmission scheme may be changed in step 208. That is, in case measured values of the signal quality indicator indicates that other channels in the first transmission scheme yields a signal quality below a predefined threshold, step 208 shifts transmission of the first signal from the first transmission scheme to the second transmission scheme.

Various other embodiments of the setting power levels and selecting a transmission scheme can be foreseen.

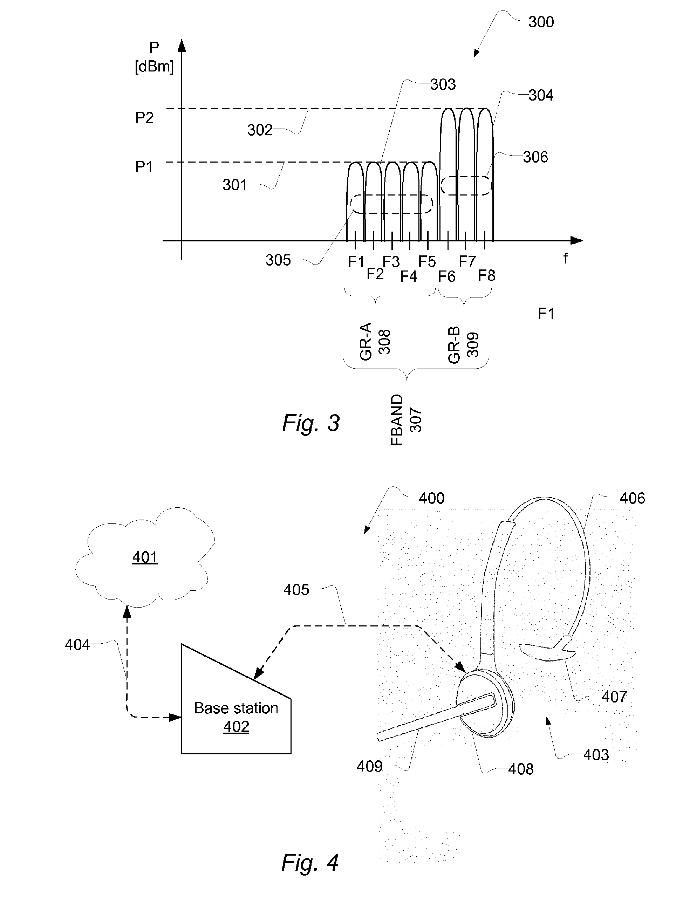

Fig. 3 shows a transmission spectrum for the first and second transmission scheme. The transmission spectrum is shown in diagram wherein the abscissa axis represents frequency, f [Hz], and wherein the ordinate axis represents transmitted power, P [dBm].

The transmission spectrum 300 shows a distribution of multiple carrier spectrums each designated 303, for respective carrier signals at a first power level P1, 301, and at centre frequencies F1 through F5. The transmission spectrum 300 also shows multiple carrier spectrums, each designated 304, for respective carrier signals at a second power level P2, 302, and at centre frequencies F6, F7 and F8.

A first group of channels, 305, is transmitted using one or more of the carrier signals in a first group GR-A, 308 of carrier signals transmitted at the first power level, P1. A second group of channels, 306, is transmitted using one or more of the carrier signals in a second group GR-B, 309, of carrier signals 309 transmitted at the second power level, P2. The first group of channels 305 and the second group of channels 306 are shown by dashed lines since the channels are not directly physical signals.

FBAND, 307, designates a frequency band within which the signals are distributed. FBAND may be located in the so-called 1.9 Ghz band i.e. slightly above or below 1.9 Ghz e.g. 1.9 GHz ±10% or at another frequency.

Fig. 4 shows a headset and a base station. The headset - sometimes denoted the portable part, PP - is in general designated 403 and comprises a headband 406 with a support 407, an earpiece 408 with a loudspeaker or speaker (not shown), and a microphone boom 409 with a microphone (not shown). The headset 403 additionally comprises a wireless transceiver (not shown) for communicating wirelessly, as illustrated by dashed line 405, with the headset base station 402 - sometimes denoted the fixed part, FP.

The headset base station 402 comprises a wireless transceiver for communicating with the headset e.g. in accordance with the DECT standard. The headset base station 402 is coupled by a wired or wireless connection 404 to a communications network 401. The communications network 401 may comprise the Publicly Switched Telephone Network (PSTN), the Internet, an Intranet or any combination thereof.

The above represents an exemplary system 400, wherein channel selection using the first transmission scheme and the second transmission scheme can be implemented.

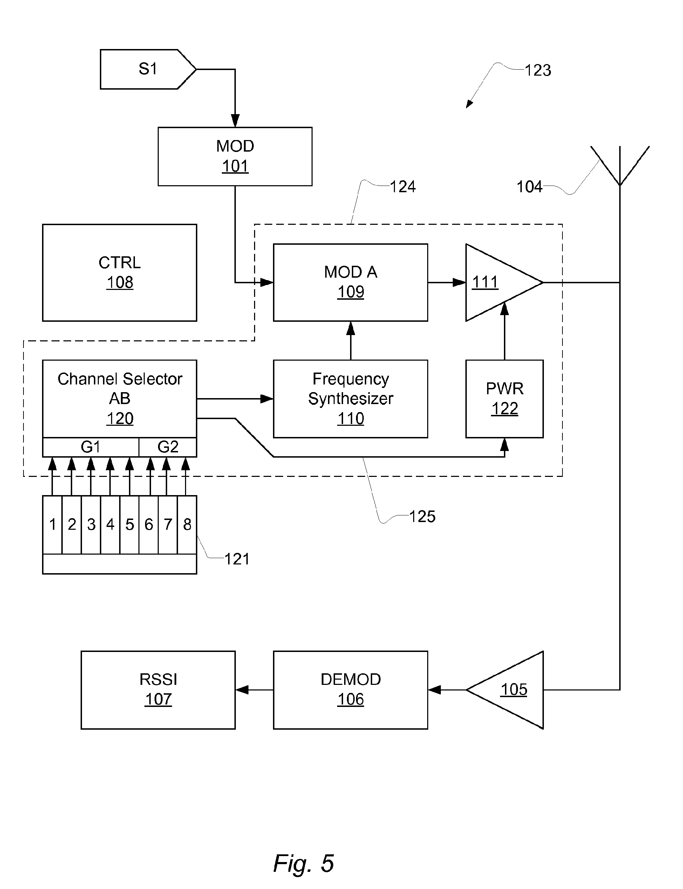

Fig. 5 shows a block diagram of a unit in a second embodiment with a first and a second transmission scheme. In this second embodiment a unit 123 is configured with a single transmitter 124 that selectively transmits the first signal, S1, in accordance with the first transmission scheme and/or the second transmission scheme.

A carrier signal for the transmitter 124 is generated by the modulator 109 and amplified by amplifier 111. The power level at which a carrier signal is transmitted is set by power unit 122. In this embodiment the power unit 122 is controlled by a channel selector 120 to transmit at a power level, be it a first (lower) power level or a second (higher) power level.

The frequency of a carrier signal is synthesized by the frequency synthesizer 110 which synthesize a frequency selected by channel selector AB, 120.

As shown channel selector AB, 120, selects a frequency channel among the channels 1 through 8. i.e. among all the available frequencies (channels). In this embodiment, a channel group organizer 121 thus assigns all available channels 1 through 8 to the first transmitter 124.

With the above described configuration of the unit 100, the signal S1 is input to the modulator, 109 via a time-division modulator 101. The time-division modulator 101 may be a TDMA modulator. By means of time-division modulation, the signal S1 is transmitted in allocated time slots or simply slots.

As shown a control path 125 connects the channel selector AB, 120 with the power unit 122. By means of the control path 125, the power unit is provided with a signal indicative of whether one or more currently synthesized carrier signals is to be transmitted at a first power level or a second power level, or at any other selected power level. The power unit responds to this signal and transmits a carrier signal at an appropriate power level. Thereby, a power level of carrier signals in a first group of channels is set to a first power level and a power level of carrier signals in a second group of channels is set to a second power level.

The channel selector AB, 120, controls that the first signal, S1, is transmitted in accordance with the first transmission scheme, wherein channel selection is restricted to the channels in the first group of channels (G1), and/or in accordance with the second transmission scheme, wherein channel selection is restricted to the channels in the second group of channels (G2).

The control path 125 may by controlled by controller 108.

The receiver portion with amplifier 105, demodulator 106 and processor 107 computing the RSSI indicator is described above. Also, the controller 108 is described above and is configured for this single transmitter embodiment.

Some embodiments comprises a method of controlling channel selection in a communications system 400 using a frequency division communications protocol, wherein predefined channels are established using multiple carrier signals at respective carrier frequencies; comprising: transmitting 205 a first signal, S1, on one or more of the channels using automatic channel selection; configuring 203 a power level of carrier signals in a first group of channels 308 for a first power level 301 and configuring a power level of carrier signals in a second group of channels 309 for a second power level 302; wherein the second power 302 level is deliberately higher than the first power level 301; wherein the first signal, S1, is transmitted in accordance with a first transmission scheme, TS-A, wherein channel selection is restricted to the channels in the first group of channels 308, and/or in accordance with the second transmission scheme, TS-B, wherein channel selection is restricted to the channels in the second group of channels 309; and branching the first signal, S1, into a first branch signal, SB1, and into a second branch signal, SB2; wherein the first branch signal and the second branch signal are transmitted in parallel in accordance with the first transmission scheme and in accordance with the second transmission scheme, respectively.

In some aspects, the method uses a DECT communications protocol.

In some aspects of the method the first group of channels is transmitted in first time slots and wherein the second group of channels is transmitted in second time slots; wherein the first time slots and the second time slots are mutually exclusive.

## Claims

1. A method of controlling channel selection in a communications system (400) using a DECT communications protocol, wherein predefined channels are established using multiple carrier signals at respective carrier frequencies (F1,F2, .. F8); comprising:
- transmitting (205) a first signal (S1) on one or more of the channels using automatic channel selection;
- configuring (203) a power level of carrier signals in a first group of channels (308) for a first power level (301) and configuring a power level of carrier signals in a second group of channels (309) for a second power level (302); wherein the second power (302) level is deliberately higher than the first power level (301);
wherein the first signal (S1) is transmitted in accordance with a first transmission scheme (TS-A), wherein channel selection is restricted to the channels in the first group of channels (308), and/or in accordance with the second transmission scheme (TS-B), wherein channel selection is restricted to the channels in the second group of channels (309).

2. A method according to claim 1, comprising:
- restricting the first signal or a group of signals for transmission in accordance with the first transmission scheme.

3. A method according to claim 1 or 2, comprising:
- receiving settings that assign signals, devices or users to:
- a first group, permitted to use exclusively the first transmission scheme, or
- a second group, permitted to use exclusively the second transmission scheme, or
- a third group, permitted to use a combination of the first and second transmission scheme;
wherein channel selection, during transmission of signals respective devices or users, is performed in accordance with the received settings.

4. A method according to any of claims 1 to 3, comprising:
- branching the first signal (S1) into a first branch signal (SB1) and into a second branch signal (SB2); wherein the first branch signal and the second branch signal are transmitted in parallel in accordance with the first transmission scheme and in accordance with the second transmission scheme, respectively.

5. A method according to any of claims 1 to 3, comprising:
- shifting a transmission of the first signal from being transmitted in accordance with the first transmission scheme to be transmitted in accordance with the second transmission scheme, or vice versa.

6. A method according to any of claims 1 to 5, comprising:
- measuring values of a signal quality indicator for each of the multiple channels;
- in respect of the first signal being transmitted on a current channel in accordance with the first transmission scheme and in connection with deciding on selecting another channel in the first transmission scheme:
shifting transmission of the signal from the first transmission scheme to the second transmission scheme in case measured values of a signal quality indicator indicates that other channels in the first transmission scheme yields a signal quality below a predefined threshold.

7. A method according to any of claims 1 to 3 or 6, comprising:
- measuring values of a signal quality indicator for each of the multiple channels;
- in respect of the first signal, determining a trend in the measured values of the signal quality indicator; and
- shifting transmission of the first signal from the first transmission scheme to the second transmission scheme, in case the trend is going towards or below a poorer signal quality level than measured for any other channel among the channels under the first transmission scheme.

8. A method according to any of claims 1 to 3 or 5 to 7, comprising:
- shifting the transmission of the first signal from the first transmission scheme to the second transmission scheme, or vice versa; wherein shifting the transmission comprises starting transmission on the second transmission scheme and stopping transmission on the first transmission scheme, or vice versa.

9. A method according to any of claims 1 to 3 or 5 to 8, comprising:
- shifting transmission from the first transmission scheme to the second transmission scheme or vice versa; and wherein shifting the transmission comprises starting transmission on the second transmission scheme and

10. A base station (402) configured to perform the steps of the method according to any one of claims 1 through 9.

11. A headset (403) configured to perform the steps of the method according to any one of claims 1 through 9.

12. A computer program product comprising program code means adapted to cause a data processing system to perform the steps of the method according to any one of claims 3 through 7, when said program code means are executed on the data processing system.

13. A computer program product according to claim 9, comprising a computer-readable medium having stored thereon the program code means.

14. A computer data signal embodied in a carrier wave and representing sequences of instructions which, when executed by a processor, cause the processor to perform the steps of the method according to any one of claims 1 through 1.

15. An apparatus configured communicate in accordance with a DECT communications protocol and to control channel selection, wherein the apparatus is configured to transmit respective carrier signals at respective carrier frequencies (F1,F2,..F8) and establish predefined channels; comprising:
- a transceiver configured to transmit a first signal (S1) on one or more of the predefined channels using automatic channel selection;
wherein the transceiver is configured to transmit carrier signals in a first group of channels (308) at a first power level (301) and to transmit carrier signals in a second group of channels (309) at a second power level (302); wherein the second power level is deliberately higher than the first power level;
wherein the transceiver is configured to transmit the first signal in accordance with a first transmission scheme, wherein channel selection is restricted to the channels in the first group (308), and/or to transmit the first signal in accordance with the second transmission scheme, wherein channel selection is restricted to the channels in the second group (309) of channels.
